# FASCICULE DE BREVET EUROPEEN

(11) **EP 0 457 708 B1**
(45) Date de publication et mention de la délivrance du brevet: **30.06.1993**
(21) Numéro de dépôt: 91480076.8
(22) Date de dépôt: 06.05.1991
(51) Int. Cl.: B65B 29/02, A47J 31/40

(54) **Agrafes de raccordement pour des bandes supports de pastilles ou gâteaux de café moulu, bandes supports ainsi obtenues, et machines à café à l'usage desdites bandes**
Heftklammern für Verpackungsfolien von Pastillen oder Kuchen von gemahlenem Kaffee, Verpackungsfolien dafür hergestellt und Kaffeemaschinen zum Gebrauch dieser Folien
Fixation staples for packaging foils for pastilles or cakes of ground coffee, packaging foils thus obtained and coffee machines for the use of these foils

(30) Priorité: 16.05.1990 FR 9006219
(43) Date de publication de la demande: 21.11.1991
(73) Titulaire: COMPAGNIE MEDITERRANEENNE DES CAFES S.A., F-06516 Carros Cédex (FR)
(72) Inventeur: Blanc, Jean-Pierre, F-06510 Gattieres (FR)
(74) Mandataire: Hautier, Jean-Louis

(56) Documents cités:
- US-A- 3 143 954
- US-A- 3 209 676
- US-A- 3 213 777
- US-A- 3 229 612

## Description

L'invention a pour objet des agrafes de raccordement pour des bandes supports de pastilles ou gâteaux de café moulu, bandes supports ainsi obtenues, et machines à café à l'usage desdites bandes.

Actuellement, de nombreuses machines à faire le café utilisent des bandes supports de pastilles ou gâteaux de poudre de café.

L'état de la technique peut être défini par le document EP-A-0.041.657. Ce brevet a pour objet une machine à café express servant à faire infuser du café en partant de gâteaux de café moulu, comprenant des moyens qui définissent une chambre d'infusion présentant une sortie pour le café infusé et conçue pour recevoir des gâteaux de café moulu ; des moyens servant à déplacer une bande contenant des gâteaux de café moulu et à placer un gâteau frais de café moulu dans la chambre d'infusion ; un récipient destiné aux gâteaux frais de café moulu et un récipient destiné aux gâteaux usés ; des moyens d'activation pouvant être manoeuvrés par l'usager pour actionner la machine ; des moyens de commande servant à alimenter les moyens de pompage ; un réservoir à eau ; des moyens servant à chauffer de l'eau, reliés fonctionnellement à la chambre d'infusion ; des moyens de pompage reliés au réservoir et aux moyens de chauffage ; des conduits reliant le réservoir et les moyens de chauffage d'eau à la chambre d'infusion, les moyens de pompage étant interposés dans les conduits, caractérisée par le fait que la machine à café est munie de deux moyens de pompage, que l'un des moyens de pompage constitue une pompe rotative et que l'autre moyen de pompage constitue une pompe alternative, ces pompes rotative et alternative étant telles qu'elles pompent alternativement de l'eau à travers un gâteau de café moulu placé dans une chambre d'infusion de la machine, que la pompe rotative est capable de délivrer une première quantité d'eau convenant à l'infusion d'un café express normal et que la pompe alternative est capable de délivrer une deuxième quantité d'eau convenant à l'infusion d'un café express faible.

Ces machines à café alimentées par des bandes supports de pastilles ou gâteaux de café moulu ont de grands avantages techniques d'utilisation, de plus, ce type d'alimentation en café moulu permet de connaître exactement le nombre de cafés servis et le nombre de pastilles de café moulu consommées. Ce dernier avantage est très intéressant pour les gérants de café ou brasserie ou tout autre type de restaurant de type collectif

La mise en place de ces bandes supports de pastilles de café moulu est délicate. Ces bandes supports sont perforées latéralement pour autoriser un entraînement par des picots.

La mise en place est voisine de la mise en place d'un ruban de film cinématographique dans un projecteur. Il est donc nécessaire d'assurer la continuité d'approvisionnement des bandes supports.

Ces bandes supports sont prévues pour un nombre déterminé de doses de café. Ce nombre dépend de la capacité de la machine à café et de son débit.

Actuellement, les utilisateurs doivent veiller visuellement sur l'alimentation en bandes supports de la machine à café.

Dès qu'une bande support est terminée, l'utilisateur doit ouvrir la machine et mettre en place une nouvelle bande support neuve chargée en doses de café moulu.

L'invention tend à résoudre tous ces problèmes.

Un appareil a été conçu pour mettre en place aux extrémités de chaque bande support de pastilles de café moulu, des moyens d'attache autorisant le raccordement avec la bande support amont et la bande support aval et ce, de manière à assurer une continuité d'alimentation de la machine à café par des séries de bandes supports et ce, sans avoir à mettre en place chaque bande support successivement.

Lesdites bandes supports comportent des moyens signalétiques qui coopèrent avec des détecteurs disposés sur la machine et qui signalent à l'utilisateur que la bande support de pastilles de café moulu arrive prochainement à la fin de ladite bande, l'utilisateur doit alors raccorder la bande aval ou bande en place en cours de fonctionnement avec la bande amont ou bande suivante chargée en doses ou pastilles de café moulu.

Les moyens d'attache ou agrafes de raccordement sont des rubans dont les profilés s'emboîtent l'un dans l'autre.

Lesdits profilés s'emboîtent l'un dans l'autre par coulissement.

Lesdits profilés s'emboîtent l'un dans l'autre par pression et entrée en force.

Le ruban est composé de deux attaches complémentaires chacune ayant une partie plate qui autorise la fixation sur la bande support et une autre partie dont le profilé permet l'accrochage avec la partie correspondante de l'autre attache.

L'appareil à poser lesdites agrafes découpe le ruban en forme de H de manière à ce qu'il puisse, à la pose, au niveau de l'extrémité des bandes supports de pastilles, laisser libres les trous de la bande pour les picots d'entraînement.

Les moyens signalétiques sont des moyens optiques coopérant avec des détecteurs optiques.

Les moyens signalétiques sont des moyens magnétiques tels que des pastilles métalliques coopérant avec des détecteurs magnétiques et/ou métalliques.

Les détecteurs optiques et/ou métalliques sont mis en place sur la machine à café au niveau de l'entrée de la bande support de pastilles.

La machine à café est pourvue à la sortie de la bande support de pastilles à café, qui sont alors usagées, d'un moyen de découpage qui découpe la bande support au niveau de chaque pastille. Lesdites pastilles désolidarisées tombent dans une poubelle prévue à cet effet, ladite poubelle comporte un détecteur de niveau pour envoyer un signal sonore et/ou lumineux, dès qu'elle est pleine de pastilles usagées.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique de la machine qui fabrique les bandes supports de pastilles de doses de café moulu de l'appareil qui met en place les agrafes attaches de raccordement pour des bandes supports de pastilles. Cette figure schématique représente l'ensemble de ces machines vue de côté.

La figure 2 est une vue de ces machines vue de dessus.

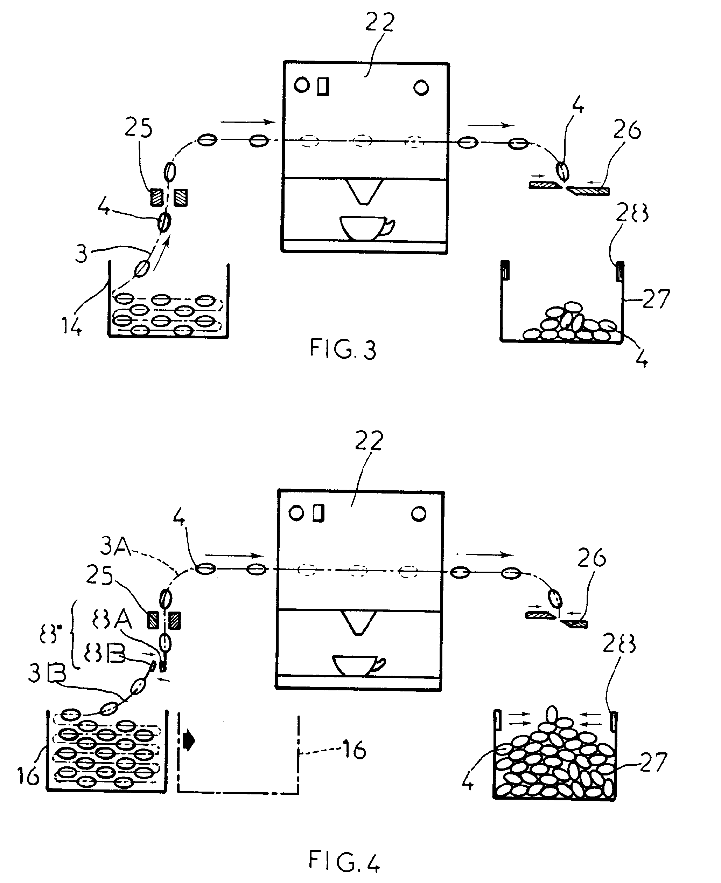

La figure 3 est une vue schématique de la machine à café mettant particulièrement en évidence l'alimentation par des séries de bandes supports de pastilles de café moulu, leurs moyens d'attaches, leurs moyens de détection de fin de bande, le moyen de découpage des pastilles ou des doses de la bande.

La figure 4 est une vue schématique de la machine à café telle que représentée à la figure 3 où l'on met en évidence par des flèches les moyens de raccordement de deux bandes supports de pastilles de café moulu entre elles et le changement d'une cartouche pleine. Cette figure 4 met également en évidence la poubelle ou bac de ramassage des doses usagées avec leurs moyens de détection de niveau.

La figure 5 est une vue de dessus de deux bandes supports contiguës avec à leurs extrémités des moyens de raccordement issus d'un ruban attache. Sur cette vue, les deux bandes sont séparées.

La figure 6 est une vue de deux bandes selon la figure 5 où les deux bandes supports ont été raccordées par leurs moyens de raccordement.

La figure 7 est une vue selon la figure 6 mais vue de côté de deux bandes supports raccordées entre elles.

La figure 8 est une vue en plan du ruban qui forme les deux moyens de raccordement ou attaches 8A, 8B, 21A, 21B. Elle met en évidence la découpe du ruban pour son application aux extrémités des bandes supports de pastilles de café moulu.

La figure 9 est une vue en coupe suivant l'axe A-A représenté à la figure 8 où les deux attaches 8A, 8B ont été raccordées entre elles par leur moyen d'accrochage et par translation.

La figure 10 est une vue suivant la figure 9 mais où les deux attaches 8A, 8B sont séparées l'une de l'autre.

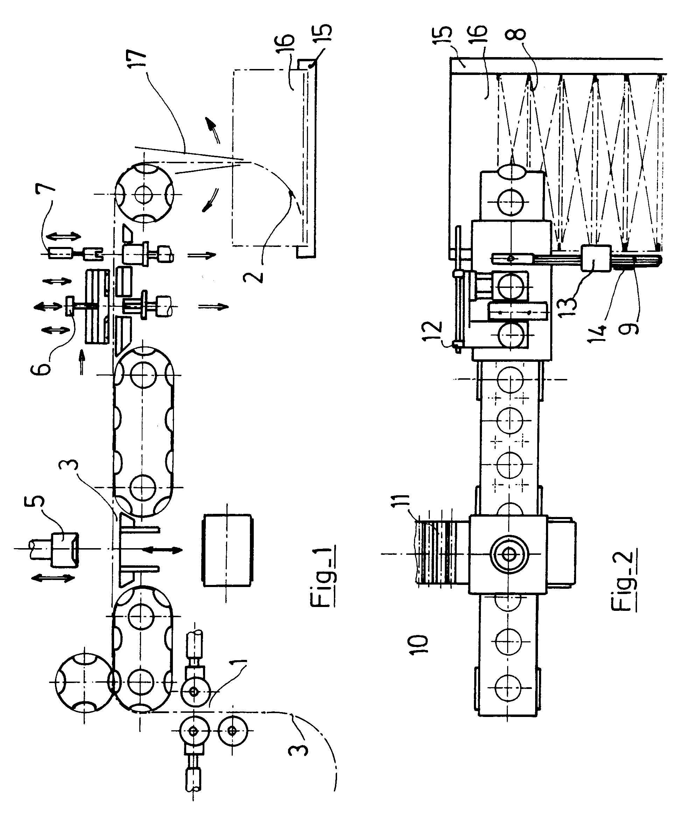

Dans la figure 1, sont représentés schématiquement le rouleau perforateur 1 qui va permettre de créer des trous 2 de chaque côté de la bande support 3 de pastilles ou gâteaux 4 de café moulu.

Sur cette même figure 1, sont représentés un outil de découpe 5 des doses individuelles ou pastilles 4, un outil de découpe 6 de la bande 3, un outil de soudure et de découpe 7 du ruban 9, des moyens d'attache 8 qui sont formés par un ruban 9.

Sur la figure 2, sont représentés des rouleaux briseurs 10, un tapis d'évacuation 11 des doses ou pastilles, un mécanisme d'avancement 12, un outil de poinçonnage 13 du ruban 9 qui forme des moyens d'attache 8, un dérouleur 14 du ruban 9, un convoyeur 15 de boîtes de rangement 16 des bandes 3, une goulotte de répartition 17 (sur la figure 1) desdites bandes 3 pour les plier en fonction de la boîte de rangement 16.

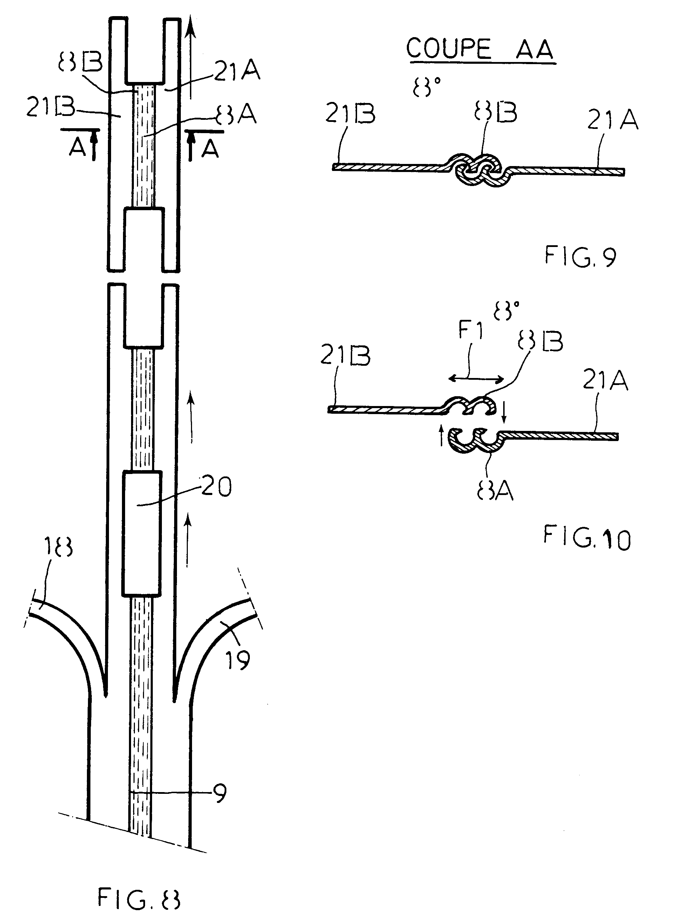

Les moyens d'attaches ou agrafes 8 de raccordement sont formés par un ruban 9 tel que réprésenté à la figure 8. Ce ruban 9 permet de former deux attaches 8 qui s'accrochent l'une dans l'autre par leur profilé d'accrochage 8A, 8B.

Ce ruban 9 est ébarbé ou mis à dimension par l'outil de découpe 6 de la bande support 3 ; les deux parties 18, 19 qui ont été ébarbées sont jetées.

L'outil de découpe 6 de la bande support 3, découpe, dans le ruban 9, une fenêtre 20. Le ruban 9 est alors découpé en deux attaches 8A, 8B qui ont la forme d'un H tel que représenté à la figure 8.

Ces deux attaches 8 sont formées chacune d'une partie faisant office de moyens d'accrochage 8A et d'une partie plate 21A qui permet la fixation sur la bande support 3.

A cette attache 8A, 21A, correspond une autre attache complémentaire composée d'un profilé d'accrochage 8B et d'une partie plate 21B qui permet la fixation sur l'autre extrémité d'une autre bande support pour les pastilles de café moulu.

Les moyens d'attache 8 s'accrochent par leur partie d'accrochage 8A, 8B (voir les figures représentées 8, 9 et 10), l'emboîtement s'effectue par translation telle qu'indiqué selon la flèche F1.

L'appareil, pour mettre en place les attaches 8, fixe lesdites attaches par leur partie plate, partie 21A, 21B sur les extrémités des bandes supports 3.

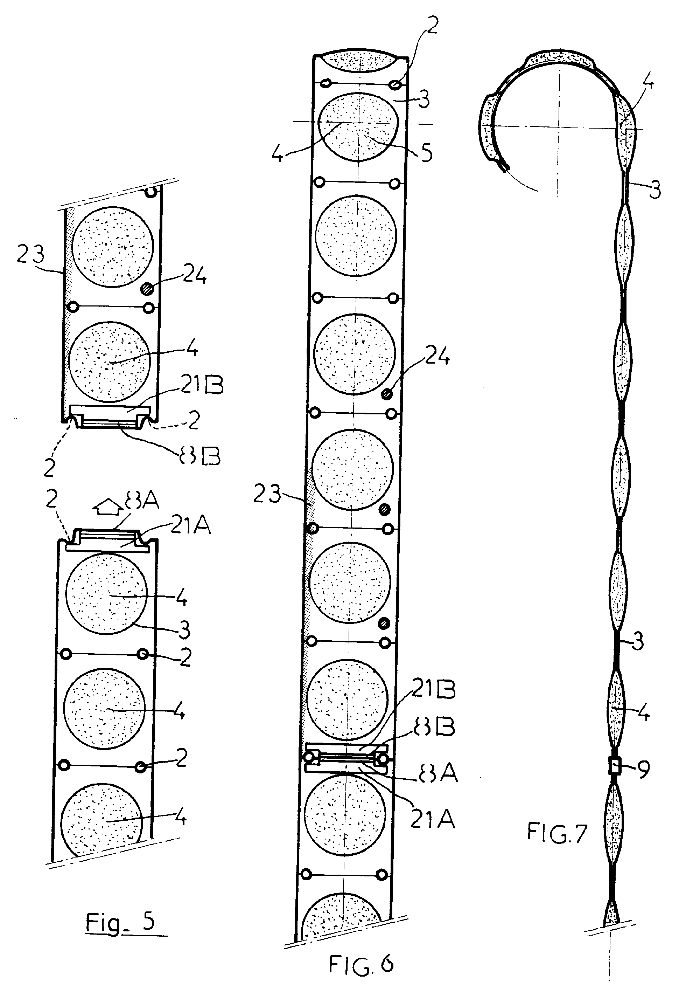

La fenêtre 20 qui a été découpée, permet de laisser la place aux trous 2 de la bande 3 (voir la figure 5), les trous 2 permettant le passage des picots d'entraînement de la bande 3 notamment dans la machine à café 22.

Lesdites bandes supports 3 comportent des moyens signalétiques 23 ou 24. Cesdits moyens signalétiques coopèrent avec des détecteurs 25 qui signalent à l'utilisateur que la bande support 3 de pastilles de café 4 arrivent prochainement à sa fin.

L'utilisateur doit alors raccorder la bande aval 3A ou bande en place en cours de fonctionnement de la machine à café 22 avec la bande amont 3B ou bande suivante chargée de doses ou pastilles de café moulu 4.

Les moyens signalétiques optiques 23 peuvent être des moyens détectables sur le plan optique ou des moyens magnétiques ou métalliques 24, détectables par des détecteurs métalliques ou détecteurs magnétiques 25. La machine à café 22 est également pourvue, à la sortie de la bande support 3, d'un moyen de découpage 26. Le moyen de découpage 26 découpe chaque pastille ou gâteau de café moulu 4 en doses individuelles et ce, de manière à faciliter la récupération des doses usagées 4 dans un bac ou poubelle 27 qui permettra de les jeter facilement.

Ledit bac peut être pourvu d'un détecteur de niveau 28 qui envoie un signal sonore et/ou lumineux pour indiquer que ladite poubelle est pleine de pastilles usagées 4 et que ladite poubelle doit être vidée ou remplacée.

### REFERENCES

- 1.: Perforateur
- 2.: Trous
- 3.: Bande supports de pastilles
- 3A.: Bande supports de pastilles aval
- 3B.: Bande supports de pastilles amont
- 4.: Pastilles ou gâteaux de café moulu
- 5.: Outil de découpe des doses ou pastilles
- 6.: Outil de découpe de la bande support
- 7.: Outil de soudure et de découpe du ruban
- 8.: Moyens d'attache
- 8A.: Profilé d'accrochage
- 8B.: Profilé d'accrochage
- 9.: Ruban
- 10.: Rouleaux briseurs
- 11.: Tapis d'évacuation des doses ou pastilles
- 12.: Mécanisme d'avancement
- 13.: Outil de poinçonnage
- 14.: Dérouleur du ruban
- 15.: Convoyeur de boîtes de bandes supports
- 16.: Boîtes de rangement des bandes supports
- 17.: Goulotte de répartition
- 18.: Partie ébarbée
- 19.: Partie ébarbée
- 20.: Fenêtre
- 21A.: Partie plate du moyen d'attache
- 21B.: Partie plate du moyen d'attache
- 22.: Machine à café
- 23.: Moyens signalétiques
- 24.: Moyens signalétiques
- 25.: Détecteurs
- 26.: Moyen de découpage de la bande support usagée
- 27.: Bac ou poubelle
- 28.: Détecteur de niveau

## Revendications

1. Bandes supports (3) de pastilles ou gâteaux (4) de café moulu pour alimenter une machine à café express (22) servant à faire infuser du café à partir de gâteaux ou doses (4) de café moulu caractérisées par le fait
qu'elles comportent à leurs extrémités des moyens d'attache telles que des agrafes (8A, 8B ; 21A, 21B) autorisant le raccordement avec la bande support amont (3B) et la bande support aval (3A) et ce, de manière à assurer une continuité d'alimentation de la machine à café (22) par des séries de bandes supports (3).

2. Bandes supports selon la revendication 1 caractérisées par le fait
qu'elles comportent des moyens signalétiques (23, 24) qui coopèrent avec des détecteurs (25) disposés sur la machine (22) et qui signalent à l'utilisateur que la bande support (3) de pastilles (4) de café moulu arrive prochainement à la fin de ladite bande (3), l'utilisateur doit alors raccorder la bande aval ou bande en place en cours de fonctionnement avec la bande amont ou bande suivante chargée en doses ou pastilles (4) de café moulu.

3. Bandes supports selon la revendication 1 caractérisées par le fait
que les moyens d'attache ou agrafes de raccordement (8) comportent les profilés d'accrochage (8A, 8B) qui s'emboîtent l'un dans l'autre.

4. Bandes supports selon la revendication 3 caractérisées par le fait
que lesdits profilés d'accrochage (8A, 8B) s'emboîtent l'un dans l'autre par coulissement.

5. Bandes supports selon la revendication 3 caractérisées par le fait
que lesdits profilés s'emboîtent l'un dans l'autre par pression et entrée en force.

6. Bandes supports selon l'une quelconque des revendications 3, 4 ou 5 caractérisées par le fait
que les moyens d'attaches ou agrafes de raccordement sont formés par un ruban (9).
que le ruban (9) est composé de deux attaches complémentaires (8) chacune ayant une partie plate (21A, 21B) qui autorise la fixation sur la bande support (3) et une autre partie (8A, 8B) dont le profilé permet l'accrochage avec la partie correspondante de l'autre attache.

7. Bandes supports selon la revendication 2 caractérisées par le fait
que les moyens signalétiques (23) sont des moyens optiques coopérant avec des détecteurs optiques.

8. Bandes supports selon la revendication 2 caractérisées par le fait
que les moyens signalétiques (24) sont des moyens magnétiques tels que des pastilles métalliques coopérant avec des détecteurs magnétiques et/ou métalliques.

9. Machine à café alimentée en bandes supports de pastilles ou gâteaux de café moulé selon l'une quelconque des revendications 1 ou 2 caractérisée par le fait
que des détecteurs optiques et/ou métalliques (25) sont mis en place sur la machine à café (22) au niveau de l'entrée de la bande support (3) de pastilles (4).

10. Machine à café selon la revendication 9 caractérisée par le fait
qu'elle est pourvue à la sortie de la bande support (3) de pastilles (4) à café, qui sont alors usagées, d'un moyen de découpage (26) qui découpe la bande support (3) au niveau de chaque pastille (4) ; lesdites pastilles (4) désolidarisées tombent dans une poubelle (27) prévue à cet effet, ladite poubelle (27) comporte un détecteur de niveau (28) pour envoyer un signal sonore et/ou lumineux, dès qu'elle est pleine de pastilles usagées (4).

11. Bandes supports selon l'une quelconque des revendications 1,3, 4 ou 5 caractérisées par le fait
que les moyens d'attaches ou agrafes de raccordement sont formés par un ruban (9) ; ce ruban (9) est ébarbé ou mis à dimension par l'outil de découpe (6) de la bande support (3) ; l'outil de soudure et de découpe (7) du ruban découpe dans le ruban (9) une fenêtre (20) ; le ruban (9) est alors découpé en deux attaches (8) qui ont la forme d'un H ; ces deux attaches (8) sont formées chacune d'une partie faisant office de moyens d'accrochage (8A) et d'une partie plate (21A) qui permet la fixation sur la bande support aval (3A) ; à cette attache (8A, 21A), correspond une autre attache complémentaire (8) composée d'un profilé d'accrochage (8B) et d'une partie plate (21B) qui permet la fixation sur l'autre extrémité d'une autre bande support (3B) pour les pastilles (4) de café moulu.

12. Bandes supports selon la revendication 11 caractérisées par le fait
que la fenêtre (20) qui a été découpée, permet de laisser la place aux trous (2) de la bande (3), les trous (2) permettant le passage des picots d'entraînement de la bande notamment dans la machine à café (22).

## Patentansprüche

1. Trägerstreifen (3) für Tabletten oder Kuchen (4) aus gemahlenem Kaffee zur Speisung einer Espresso-Maschine (22), die dazu dienen, Kaffee ausgehend von Kuchen oder Portionen (4) aus gemahlenem Kaffee aufzugießen,
dadurch gekennzeichnet,
daß sie an ihren Enden Befestigungsmittel aufweisen, wie zum Beispiel Klammern (8A, 8B; 21A, 21B), die die Verbindung eines Trägerstreifens (3A) mit einem nachfolgenden Trägerstreifen (3B) ermöglichen, und zwar so, daß eine kontinuierliche Speisung der Kaffeemaschine (22) durch aufeinanderfolgende Trägerstreifen (3) gewährleistet wird.

2. Trägerstreifen nach Anspruch 1,
dadurch gekennzeichnet,
daß sie Signalmittel (23, 24) aufweisen, die mit auf der Maschine (22) angeordneten Detektoren (25) zusammenwirken, und die dem Benutzer signalisieren, daß der Trägerstreifen für Tabletten (4) von gemahlenem Kaffee in Kürze am Ende des Streifens ankommt, wobei der Benutzer dann den sich in Betrieb befindlichen Streifen (3A) mit dem nachfolgenden mit Portionen oder Tabletten (4) von gemahlenem Kaffee beladenen Streifen verbinden muß.

3. Trägerstreifen nach Anspruch 1,
dadurch gekennzeichnet,
daß die Befestigungsmittel oder Verbindungsklammern (8) Verhakungsprofile aufweisen (8A, 8B), die ineinander gefügt werden.

4. Trägerstreifen nach Anspruch 3,
dadurch gekennzeichnet,
daß diese Verhakungsprofile (8A, 8B) durch Schieben ineinandergefügt werden.

5. Trägerstreifen nach Anspruch 3,
dadurch gekennzeichnet,
daß diese Profile durch Druck und Kraftanwendung ineinandergefügt werden.

6. Trägerstreifen nach einem der Ansprüche 3, 4 oder 5,
dadurch gekennzeichnet,
daß die Befestigungsmittel oder Verbindungsklammern aus einem Band (9) gebildet sind, und daß das Band (9) aus zwei sich ergänzenden Befestigungen (8) besteht, von denen jede einen flachen Teil (21A, 21B) aufweist, der die Befestigung auf dem Trägerstreifen (3) ermöglicht und einen anderen Teil (8A, 8B), dessen Profil das Verhaken mit dem entsprechenden Teil der anderen Befestigung ermöglicht.

7. Trägerstreifen nach Anspruch 2,
dadurch gekennzeichnet,
daß die Signalmittel (23) optische Mittel sind, die mit optischen Detektoren zusammenwirken .

8. Trägerstreifen nach Anspruch 2,
dadurch gekennzeichnet,
daß die Signalmittel (24) magnetische Mittel sind wie zum Beispiel Metalltabletten, die mit Magnet- und/oder Metalldetektoren zusammenwirken.

9. Kaffeemaschine, die mit Trägerstreifen von Tabletten oder Kuchen von gemahlenem Kaffee nach einem der Ansprüche 1 oder 2 gespeist wird,
dadurch gekennzeichnet,
daß optische und/oder Metall-Detektoren (25) auf der Kaffeemaschine (22) am Eingang des Trägerstreifens (3) für Tabletten(4) angebracht werden.

10. Kaffeemaschine nach Anspruch 9,
dadurch gekennzeichnet,
daß sie am Ausgang des Trägerstreifens (3) für Tabletten (4) aus Kaffee, die dann verbraucht sind, ein Schneidemittel (26) aufweist, das den Trägerstreifen (3) in Höhe jeder Tablette (4) abschneidet; die voneinander abgetrennten Tabletten (4) fallen in einen zu diesem Zweck vorgesehenen Mülleimer (27), wobei dieser Mülleimer (27) einen Füllstand-Detektor (28) aufweist, der ein Ton- oder Lichtsignal aussendet, sobald er mit verbrauchten Tabletten (4) vollgefüllt ist.

11. Trägerstreifen nach einem der Ansprüche 1, 3, 4 oder 5,
dadurch gekennzeichnet,
daß die Befestigungsmittel oder Verbindungsklammern aus einem Band (9) gebildet sind; dieses Band (9) wird durch das Schneidewerkzeug (6) des Trägerstreifens (3) abgeschnitten oder auf das richtige Maß gebracht; das Schweiß- und Schneidewerkzeug (7) des Bandes schneidet aus dem Band (9) ein Fenster (20) aus; das Band (9) wird dann in zwei H-förmige Befestigungen (8) geschnitten; diese beiden Befestigungen (8) sind jeweils aus einem als Verhakungsmittel (8A) wirkenden Teil und einem flachen Teil (21A) gebildet, der die Befestigung auf dem unteren Trägerstreifen (3A) ermöglicht; dieser Befestigung (8A, 21A) entspricht eine andere ergänzende Befestigung (8), die aus einem Verhakungsprofil (8B) und einem flachen Teil (21B) besteht, der die Befestigung am anderen Ende eines weiteren Trägerstreifens (3B) für Tabletten (4) aus gemahlenem Kaffee ermöglicht.

12. Trägerstreifen nach Anspruch 11,
dadurch gekennzeichnet,
daß es das ausgeschnittene Fenster (20) ermöglicht, den Löchern (2) in der Folie (3) Platz zu lassen, wobei die Löcher (2) den Durchgang der Antriebszähnchen des Streifens insbesondere in der Kaffeemaschine (22) ermöglichen.

## Claims

1. Carrier strips (3) for tablets or cakes (4) of ground coffee for feeding an espresso machine (22), serving to make coffee from cakes or portions (4) of ground coffee,
**characterized** in that,
at their ends, they have attaching means, for instance clips (8A, 8B; 21A, 21B) facilitating connection of a carrier strip (3A) to a succeeding carrier strip (3B) so as to ensure continuous feeding of the coffee machine (22) by means of successive carrier strips (3).

2. The carrier strips according to claim 1,
characterized in that
these comrise signaling means (23, 24) cooperating with detectors (25) arranged on the machine (22) and signaling to the user that the carrier strip for tablets (4) of ground coffee will arrive at the end of the strip shortly, the user then having to connect the strip (3A) in operation to the successive one, loaded with portions or tablets (4) of ground coffee.

3. The carrier strips according to claim 1,
characterized in that
the attaching means or connecting clips (8) have hooking profiles (8A, 8B) for engaging one another another.

4. The carrier strips according to claim 3,
characterized in that
these hooking profiles (8A, 8B) are mutually engaged through shifting.

5. The carrier strips according to claim 3,
characterized in that
these profiles are mutually engaged by applying pressure and a force.

6. The carrier strips according to one of claims 3, 4 or 5,
characterized in that
the attaching means or connecting clips are formed of a tape (9) and in that the tape (9) consists of two supplementary attachments (8) each of which comprises a flat portion (21A, 21B) facilitating attachment to the carrier strip (3), and another portion (8A, 8B) whose profile permits hooking into the corresponding portion of the other attachment.

7. The carrier strips according to claim 2,
characterized in that
the signaling means (23) are optical means cooperating with optical detectors.

8. The carrier strips according to claim 2,
characterized in that
the signaling means (24) are magnetic means, such as, for instance, metal tablets, which cooperate with magnetic and/or metallic detectors.

9. A coffee machine, fed with carrier strips for tablets or cakes of moulded coffee according to one of claims 1 or 2,
characterized in that
optical and/or metal detectors (25) are disposed on the coffee machine (22) at the entrance of the carrier strip (3) for tablets (4).

10. The coffee machine according to claim 9,
characterized in that
at the exit of the carrier strip (3) for tablets (4) of coffee, which then are used up, it comprises a cutting means (26) for severing the carrier strip (3) at the level of each tablet (4); the tablets (4), severed from one another, fall into a garbage can (27) provided to this end, this garbage can (27) comprising a level detector (28) which emits a sound or light signal as soon as it is full with used-up tablets (4).

11. The carrier strips according to one of claims 1, 3, 4
or 5, characterized in that
the attaching means or connecting clips are formed of a tape (9); this tape (9) is severed by means of the cutting tool (6) of the carrier strip (3) or given the correct dimension; the welding and cutting tool (7) for this tape cuts out a window (20) from the tape (9); the tape (9) then is cut into two H-shaped attachments (8); these two attachments (8) are formed, respectively, of a portion having the effect of a hooking means (8A) and of a flat portion (21A) facilitating attachment to the lower carrier strip (3A); to this attachment (8A, 21A) another supplementary attachment (8) corresponds, consisting of a hooking profile (8B) and of a flat portion (21B) facilitating attachment to the other end of a further carrier strip (3B) for tablets (4) of ground coffee.

12. The carrier strips according to claim 11,
characterized in that
the cut-out window (20) permits it to leave space for the holes (2) in the foil (3), with the holes (2) facilitating the passage of the driving teeth of the strip in particular in the coffee machine (22).
